# EUROPEAN PATENT APPLICATION

(11) **EP 2 896 871 A2**
(43) Date of publication of application: **22.07.2015**
(21) Application number: 14190407.8
(22) Date of filing: 27.10.2014
(51) Int. Cl.: F17C 5/06

(54) **Gas filling apparatus and gas filling method**

(30) Priority: 29.11.2013 JP 2013248227
(71) Applicant: Kabushiki Kaisha Kobe Seiko Sho, Chuo-ku, Kobe-shi, Hyogo 651-8585 (JP)
(72) Inventor: Takano, Masashi, Takasago-shi, Hyogo 676-8670 (JP); Nagura, Kenji, Takasago-shi, Hyogo 676-8670 (JP); Uba, Takuro, Takasago-shi, Hyogo 676-8670 (JP)
(74) Representative: TBK

(57) **Abstract**

A gas filling apparatus in the present invention includes an accumulator, a compressor, a pressure sensor for detecting the pressure of gas delivered from a dispenser to be delivered to a gas tank, a regulating valve for regulating the gas flow rate, and a controller. To prevent a rapid rise in pressure of gas supplied to the gas tank, the controller includes an opening control unit for controlling the opening of the regulating valve when a detected value of the pressure sensor is lower than a pressure corresponding to the gas pressure in the accumulator by a predetermined value or more, and a compression control unit for controlling drive of the compressor so that the compressor compresses sucked gas when a pressure difference of a pressure detected by the pressure sensor from a pressure corresponding to the gas pressure in the accumulator becomes a value smaller than the predetermined value.

## Description

### BACKGROUND OF THE INVENTION

### (FIELD OF THE INVENTION)

The present invention relates to gas filling apparatuses and gas filling methods.

### (DESCRIPTION OF THE RELATED ART)

As disclosed in JP 2012-77858 A, a gas filling apparatus for supplying gas to a gas tank mounted in a tank-equipped apparatus has been known. This gas filling apparatus is provided with an accumulator for storing gas, a compressor for sucking gas stored in the accumulator and compressing it, and a delivery nozzle for delivering gas discharged from the compressor to the gas tank in the tank-equipped apparatus.

JP 2005-155486 A discloses a reciprocating compressor for compressing gas and supplying it to a supply destination. To a cylinder of the compressor, a suction line and a discharge line are connected. By causing a piston to reciprocate, gas sucked through the suction line into the cylinder can be compressed and discharged through the discharge line. On the other hand, when the gas pressure in the suction line is higher than the gas pressure in the discharge line, gas flowing into the cylinder is discharged into the discharge line without being substantially compressed.

The compressor disclosed in JP 2005-155486 A can be used in the gas filling apparatus disclosed in JP 2012-77858 A. In this case, the flow rate of gas supplied from the accumulator varies, depending on a pressure difference between the pressure of gas stored in the accumulator and a gas pressure on the delivery nozzle side. This can cause the gas flow rate to become excessive, depending on the pressure difference, resulting in a rapid rise in the pressure of the gas supplied to the gas tank.

The present invention has been made in view of the above conventional arts, and has an object of providing a gas filling apparatus and a gas filling method that can prevent a rapid rise in the pressure of gas supplied to a gas tank.

### SUMMARY OF THE INVENTION

In order to achieve the above-described object, the present invention provides a gas filling apparatus for supplying gas to a gas tank mounted in a tank-equipped apparatus, which includes an accumulator for storing gas, a compressor for sucking the gas in the accumulator while discharging the sucked gas, a driving machine for driving the compressor, the driving machine being adjustable in rotational speed, a dispenser for delivering the gas discharged from the compressor to the gas tank, a supply pressure sensor for detecting the pressure of the gas delivered from the dispenser to the gas tank, a regulating valve for regulating the flow rate of the gas sucked into the compressor, and a controller for performing control of the amount of gas supply, the controller including an opening control unit for controlling the opening of the regulating valve when a value obtained by subtracting a gas pressure value detected by the supply pressure sensor from a gas pressure value in the accumulator or a corresponding pressure value is more than or equal to a predetermined value, and a compression control unit for controlling drive of the compressor so that the compressor compresses the sucked gas when a value obtained by subtracting a gas pressure value detected by the supply pressure sensor from a gas pressure value in the accumulator or a corresponding pressure value becomes a value smaller than the predetermined value.

In the present invention, when the gas pressure in the accumulator is higher than the pressure on the discharge side (dispenser side) of the compressor, the pressure difference allows the gas to be supplied from the dispenser to the gas tank of the tank-equipped apparatus. At this time, when the detected value of the supply pressure sensor is lower than the gas pressure in the accumulator or a corresponding pressure by the predetermined value or more, the gas can flow rapidly, depending on the pressure difference. Thus, the opening control unit controls the opening of the regulating valve to prevent the flow rate of the gas introduced into the compressor from becoming excessive. Consequently, the flow rate of the gas supplied to the gas tank can be adjusted not to become excessive to prevent the pressure rise rate of the gas pressure in the gas tank from becoming excessive. When the pressure difference between the gas pressure in the accumulator and the gas pressure on the dispenser side becomes smaller, the flow rate of the gas delivered from the dispenser decreases correspondingly. Therefore, when the pressure difference of the gas pressure detected by the supply pressure sensor from the gas pressure in the accumulator or a corresponding pressure becomes smaller than the predetermined value, the compression control unit of the controller controls the drive of the compressor so that the compressor compresses the sucked gas. With this, even when the gas pressure on the dispenser side becomes higher, the supply of gas to the gas tank can be continued.

Here, the opening control unit may control the opening of the regulating valve by feedback control, according to a pressure difference between a gas pressure detected by the supply pressure sensor and a target pressure.

In this aspect, when the target pressure of the gas delivered from the dispenser to the gas tank varies, depending on the amount of gas supplied to the gas tank, the opening control unit controls the regulating valve, according to a difference of the pressure detected by the supply pressure sensor from the target pressure. Thus, the gas flow rate can be adjusted so that the pressure of the gas delivered from the dispenser follows the target pressure.

In this aspect, when a gas pressure detected by the supply pressure sensor becomes a pressure lower than the target pressure by a predetermined value or more, the opening control unit may add gap control to the feedback control to control the regulating valve.

In this aspect, even though the amount of gas through the regulating valve is adjusted by the feedback control, the pressure detected by the supply pressure sensor becomes likely to deviate from the momentarily varying target pressure. Therefore, the gap control is added so as to increase the amount of flow more than the amount of gas through the regulating valve controlled by the PID control. With this, when the pressure detected by the supply pressure sensor becomes a pressure lower than the target pressure by the predetermined value or more, the gas flow rate can be increased more than ever, and the pressure detected by the supply pressure sensor can be made to follow the target pressure.

Likewise, the compression control unit may control the rotational speed of the driving machine by feedback control, according to a pressure difference between a gas pressure detected by the supply pressure sensor and a target pressure.

The gas filling apparatus may include a return line for returning at least a portion of the gas discharged from the compressor to a suction side of the compressor.

In this aspect, since the return line returns at least a portion of the gas discharged from the compressor to the suction side of the compressor, the flow rate of the gas delivered from the dispenser can be reduced correspondingly. Thus, also when it is desired to reduce the amount of gas supply such as when it is immediately before stopping supply, the rotational speed of the compressor can be maintained at a predetermined rotational speed. Consequently, it can be prevented that by driving the compressor at a speed lower than or equal to the predetermined rotational speed, the operation of the compressor becomes unstable. Further, the range of variation in the rotational speed of the compressor can be reduced.

The gas filling apparatus may include an opening/closing valve disposed on a discharge side of the compressor. In this case, at the end of filling the gas tank, the controller may perform stop control for adjusting the amount of return of the gas by the return line, and closing the opening/closing valve.

In this aspect, at the stop control, the opening/closing valve disposed on the discharge side of the compressor is closed, and at the same time, the return line returns the gas discharged from the compressor to the suction side of the compressor. Consequently, even though the compressor takes time to stop, the opening/closing valve can be closed immediately when filling to a predetermined amount is completed.

The present invention provides a gas filling method for supplying gas from an accumulator, via a compressor, and through a dispenser in a gas filling apparatus, to a gas tank mounted in a tank-equipped apparatus, which includes, when a value obtained by subtracting a pressure value of the gas delivered from the dispenser from a gas pressure value in the accumulator or a corresponding pressure value is more than or equal to a predetermined value, controlling the flow rate of the gas sucked into the compressor, and when a value obtained by subtracting a pressure value of the gas delivered from the dispenser from a gas pressure value in the accumulator or a corresponding pressure value becomes a value smaller than the predetermined value, controlling drive of the compressor so that the compressor compresses the sucked gas.

In the gas filling method, the regulating valve may be controlled by feedback control, according to a pressure difference between the gas pressure detected by the supply pressure sensor and a target pressure.

In the gas filling method, when a gas pressure detected by the supply pressure sensor becomes a pressure lower than the target pressure by a predetermined value or more, gap control may be added in addition to the feedback control to control the regulating valve.

In the gas filling method, drive of the compressor may be controlled by feedback control, according to a pressure difference between the pressure of gas delivered from the dispenser and a target pressure.

In the gas filling method, at the end of filling the gas tank, stop control may be performed for adjusting the amount of return of the gas discharged from the compressor to a suction side, and closing an opening/closing valve disposed on a discharge side of the compressor.

As described above, according to the present invention, the pressure of the gas supplied to the gas tank can be prevented from rising rapidly.

### BRIEF DESCRIPTION OF THE DRAWINGS

FIG. 1 is a diagram schematically illustrating an overall configuration of a gas filling apparatus according to an embodiment of the present invention.
FIG. 2 is a diagram for illustrating a configuration of a compressor provided in the gas filling apparatus.
FIG. 3 is a diagram for illustrating a gas filling method by the gas filling apparatus.
FIG. 4 is a diagram for illustrating a standby operation in the gas filling method according to the embodiment of the present invention.
FIG. 5 is a diagram for illustrating a supply operation in the gas filling method.
FIG. 6 is a diagram for illustrating the progression of a target pressure and the progression of a detected value of a pressure sensor in the supply operation.
FIG. 7 is a diagram schematically illustrating an overall configuration of a gas filling apparatus according to another embodiment of the present invention.
FIG. 8 is a diagram for illustrating a supply operation in another embodiment of the present invention.

### DESCRIPTION OF THE PREFERRED EMBODIMENTS

Hereinafter, an embodiment for implementing the present invention will be described in detail with reference to the drawings.

A gas filling apparatus 10 according to this embodiment is intended to supply hydrogen gas to a fuel cell vehicle 4, which is an example of a tank-equipped apparatus in which a gas tank 2 is mounted, and is provided in a hydrogen station as a hydrogen gas fueling station, for example.

The gas filling apparatus 10 includes an accumulator 12 in which hydrogen gas is stored, a compressor 14 for sucking the hydrogen gas in the accumulator 12 while discharging the sucked hydrogen gas, a dispenser 16 for delivering the hydrogen gas discharged from the compressor 14 to the gas tank 2, a first opening/closing valve 18, which is an opening/closing valve on the discharge side, and a second opening/closing valve 20, which is an opening/closing valve on the suction side.

The hydrogen gas is stored in the accumulator 12 at a predetermined pressure (for example, 40 MPa). One end of a suction line 24 is connected to the accumulator 12, and the other end of the suction line 24 is connected to a suction portion of the compressor 14. Thus, the hydrogen gas in the accumulator 12 is introduced into the compressor 14 through the suction line 24.

One end of a discharge line 26 is connected to a discharge portion of the compressor 14, and the other end of the discharge line 26 is connected to an inflow port of the dispenser 16. Thus, the hydrogen gas discharged from the compressor 14 is introduced into the dispenser 16 through the discharge line 26. In practice, equipment such as a cooler is provided between the compressor 14 and the dispenser 16.

A delivery line 28 through which the hydrogen gas introduced into the dispenser 16 through the discharge line 26 is delivered is connected to the dispenser 16. A nozzle portion 28a is provided at the distal end of the delivery line 28 for delivering the hydrogen gas to the gas tank 2 of the fuel cell vehicle 4.

Pressure in the accumulator 12 is set at a predetermined pressure (for example, 40 MPa), and thus the dispenser 16 is provided with a storage unit 16a for storing a reference pressure as a pressure corresponding to the predetermined pressure. Also, a map in which time elapsed since the start of hydrogen gas filling is associated with target pressure of the hydrogen gas supplied from the dispenser 16 is stored in the storage unit 16a of the dispenser 16.

The first opening/closing valve 18 is provided in the discharge line 26, and the second opening/closing valve 20 is provided in the suction line 24.

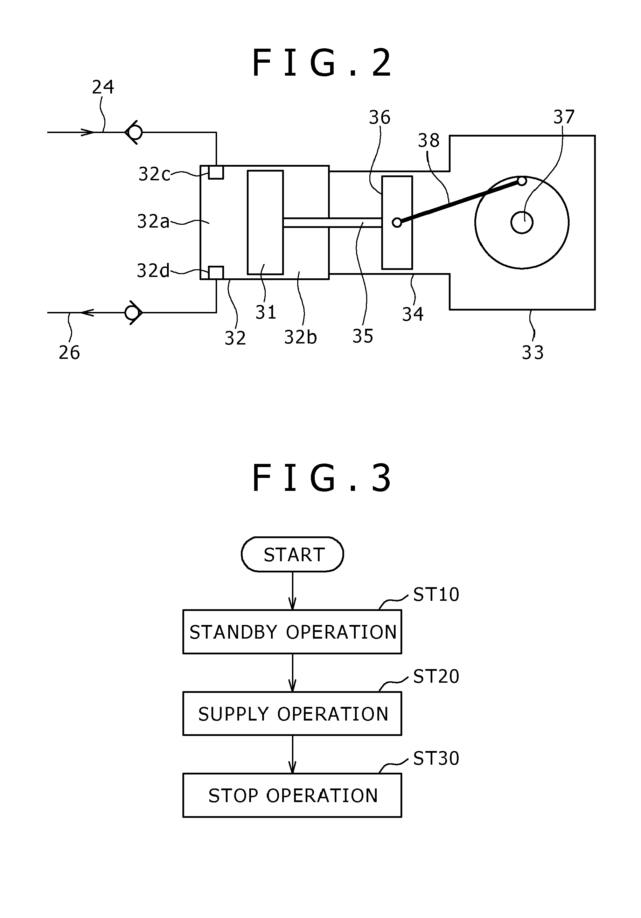

As shown in FIG. 2, the compressor 14 is constituted by a reciprocating compressor. Specifically, the compressor 14 includes a piston 31, a cylinder 32 housing the piston 31, a crankcase 33, a cross guide 34, a piston rod 35, a crosshead 36, a crankshaft 37, and a connecting rod 38.

The cross guide 34 connects the cylinder 32 and the crankcase 33. The crosshead 36 is reciprocatably housed in the cross guide 34.

The crankshaft 37 is provided in the crankcase 33, and is driven by a motor not shown to rotate. The connecting rod 38 connects the crankshaft 37 and the crosshead 36. The piston rod 35 connects the piston 31 and the crosshead 36. Rotation of the crankshaft 37 causes the crosshead 36 to reciprocate, in synchronization with which the piston 31 reciprocates in the cylinder 32.

Space in the cylinder 32 is divided into a compression chamber 32a and a non-compression chamber 32b by the piston 31. The compression chamber 32a is a space into which the suction line 24 and the discharge line 26 open, and hydrogen gas sucked through the suction line 24 is introduced.

The cylinder 32 is provided with a suction valve 32c and a discharge valve 32d. The suction valve 32c is provided at a connection line (the suction portion of the compressor 14) of the suction line 24. A spring (not shown) is provided in the suction valve 32c so that the suction valve 32c opens when the pressure in the suction line 24 is higher than the pressure in the compression chamber 32a, and closes when the pressure in the suction line 24 is lower than the pressure in the compression chamber 32a.

The discharge valve 32d is provided at a connection line (the discharge portion of the compressor 14) of the discharge line 26. A spring (not shown) is provided in the discharge valve 32d so that the discharge valve 32d opens when the pressure in the compression chamber 32a is higher than the pressure in the discharge line 26, and closes when the pressure in the compression chamber 32a is lower than the pressure in the discharge line 26.

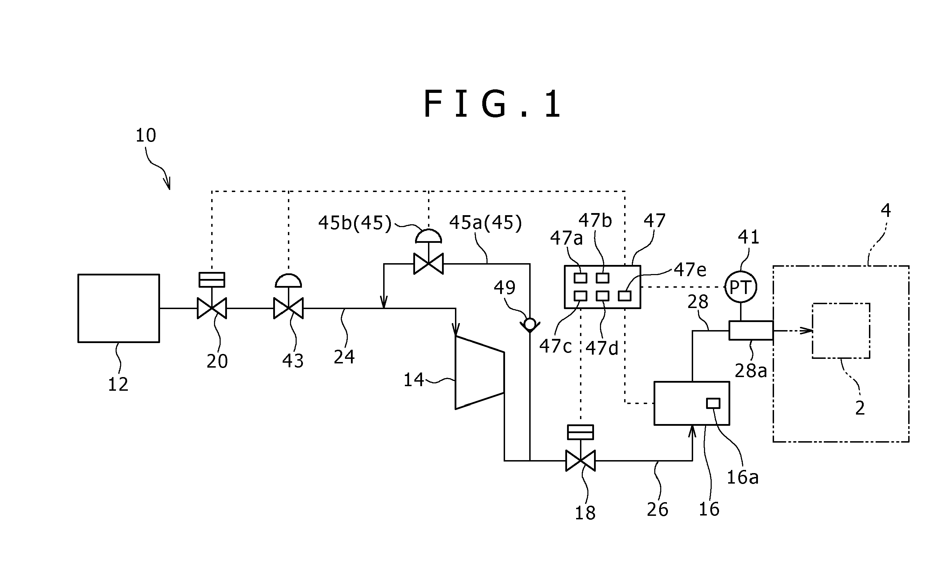

As shown in FIG. 1, the gas filling apparatus 10 is provide with a pressure sensor 41 as a supply pressure sensor for detecting the pressure of the gas delivered from the dispenser 16, a regulating valve 43 for regulating the flow rate of the gas sucked into the compressor 14, a return line 45 for returning at least a portion of the gas discharged from the compressor 14 to the suction side of the compressor 14, and a controller 47 as a controller for performing control of the amount of hydrogen gas supply.

The pressure sensor 41 is disposed, for example, at the nozzle portion 28a in the delivery line 28, and is configured to detect the pressure of the hydrogen gas in the delivery line 28.

The regulating valve 43 is provided downstream of the second opening/closing valve 20 in the suction line 24. The regulating valve 43 is constituted by a valve that can be adjusted in opening as desired, and is configured to perform opening adjustment in accordance with a command outputted from the controller 47.

The return line 45 includes a return passage 45a and a spill-back valve 45b provided in the return passage 45a. The spill-back valve 45b is a valve that can be adjusted in opening as desired, and performs opening adjustment in accordance with a command outputted from the controller 47. Also provided in the return passage 45a is a check valve 49 that allows a flow from an end connected to the discharge line 26 to an end connected to the suction line 24 while preventing a flow in the opposite direction.

The controller 47 performs control for adjusting the amount of gas supply so that the pressure rise rate of the hydrogen gas supplied to the gas tank 2 is lower than or equal to a specified rate. For hydrogen gas filling, it is necessary to control the rate lower than or equal to an average pressure ramp rate (APRR) as specified in a hydrogen filling protocol such as Society of Automotive Engineers (SAE). Therefore, the controller 47 performs control for adjusting gas supply amount so that the pressure rise rate of the hydrogen gas is lower than or equal to the specified rate.

The controller 47 includes an arithmetic unit, a storage unit, a temporary storage unit, and others, and is configured to fulfill predetermined functions by executing a program stored in the storage unit. Functions of the controller 47 include a target generation unit 47a, a compression control unit 47b, an opening control unit 47c, a return control unit 47d, and an opening/closing control unit 47e.

The target generation unit 47a successively reads a target pressure from the storage unit 16a of the dispenser 16 for a period between the start of filling and the completion of filling. Here, for the target pressure stored in the storage unit 16a, a target pressure associated with time elapsed since the start of filling is set so that the pressure rise rate of the gas tank 2 can be controlled not to exceed a predetermined APRR for a period between the start of filling at a pressure and the completion of filling the gas tank 2 at a final pressure (for example, 70 MPa).

The compression control unit 47b executes control for adjusting the rotational speed of the compressor 14. The motor of the compressor 14 for rotating the crankshaft 37 is configured to be adjustable in rotational speed by an inverter not shown. The compression control unit 47b outputs a signal for adjusting the rotational speed of the motor.

The opening control unit 47c executes control for adjusting the opening of the regulating valve 43. The opening control unit 47c is configured to compare a detected value of the pressure sensor 41 with a target pressure read by the target generation unit 47a, and controls the opening of the regulating valve 43, based on the comparison result.

The return control unit 47d executes control for adjusting the opening of the spill-back valve 45b. The spill-back valve 45b is adjusted in opening based on a signal outputted from the controller 47.

The opening/closing control unit 47e executes control for opening and closing the first opening/closing valve 18 and the second opening/closing valve 20. The first opening/closing valve 18 and the second opening/closing valve 20 open or close, individually, based on a signal outputted from the controller 47.

Next, operation control of the gas filling apparatus 10 according to this embodiment will be described. The gas filling apparatus 10 operates as described below, thereby implementing a gas filling method for supplying gas from the accumulator 12 to the gas tank 2 of the fuel cell vehicle 4.

The gas filling method includes, as shown in FIG. 3, a standby operation (step ST10), a supply operation (step ST20), and a stop operation (step ST30). The standby operation (step ST10) is a preparation operation for a state in which hydrogen gas can be supplied. The supply operation (step ST20) is an operation for supplying hydrogen gas to the gas tank 2. The stop operation (step ST30) is an operation when the supply of hydrogen gas is stopped.

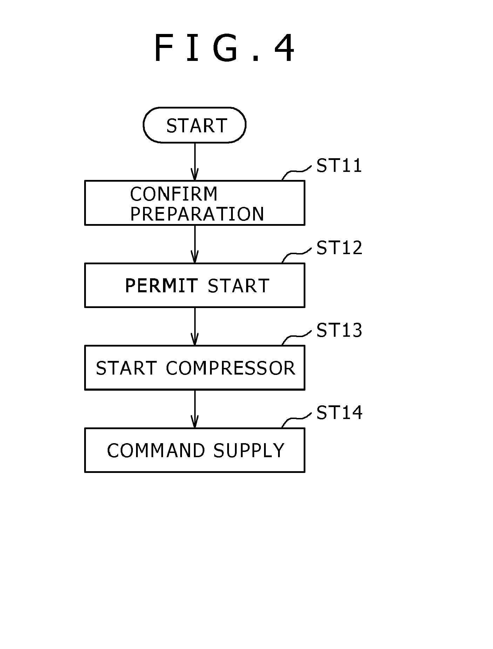

As shown in FIG. 4, in the standby operation (step ST10), all of the first opening/closing valve 18, the second opening/closing valve 20, and the regulating valve 43 are in closed states. When the controller 47 confirms that preparation of the compressor 14 and the dispenser 16 has been completed, and confirms that the fuel cell vehicle 4 is put on standby in a predetermined position in a hydrogen station (step ST11), the controller 47 outputs a start permission signal (step ST12). Alternatively, it may be configured such that the dispenser 16 outputs a start permission signal.

When a user operates a start button not shown in this state, the compressor 14 is started (step ST13). The motor of the compressor 14 gradually increases the rotational speed until it is more than or equal to a predetermined rotational speed (first rotational speed) at which the output torque of the motor becomes adequate. When the motor of the compressor 14 reaches the first rotational speed, the preparation is completed. At this time, the first opening/closing valve 18 and the second opening/closing valve 20 are held closed, while the spill-back valve 45b is opened in a fully open state. Thus, the hydrogen gas discharged from the compressor 14 is returned through the return passage 45a to the suction line 24, and the hydrogen gas circulates between the first opening/closing valve 18 and the second opening/closing valve 20.

The first rotational speed is set, for example, at a rotational speed of about 30% of the maximum rotational speed of the motor. However, the first rotational speed is not limited to this value, and can be changed as appropriate, depending on the type of the compressor 14 or the like.

When the rotational speed of the motor of the compressor 14 reaches the first rotational speed, the controller 47 transmits a supply command (step ST14), and the supply operation is started (step ST20). Alternatively, it may be configured such that the dispenser 16 transmits a supply command.

When the supply operation (step ST20) is started, the opening/closing control unit 47e executes control for opening the first opening/closing valve 18 and the second opening/closing valve 20, and the opening control unit 47c executes control for gradually opening the regulating valve 43.

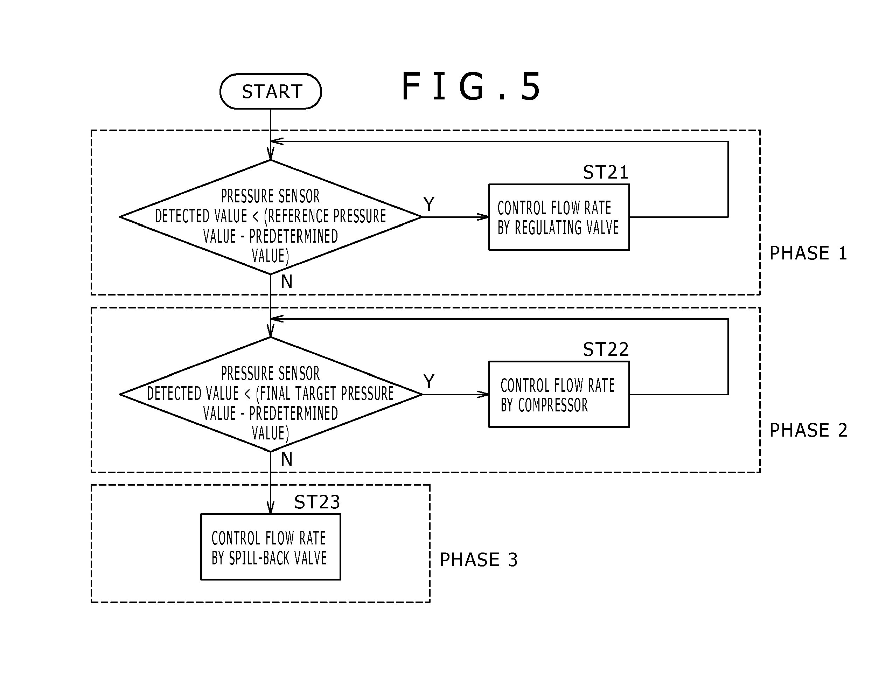

As shown in FIG. 5, the supply operation (step ST20) includes phase 1 in which the control of the hydrogen gas flow rate by the opening adjustment of the regulating valve 43 (step ST21) is executed, phase 2 in which the control of the hydrogen gas flow rate by the motor rotational speed adjustment of the compressor 14 (step ST22) is executed, and phase 3 in which the control of the hydrogen gas flow rate by the opening adjustment of the spill-back valve 45b (step ST23) is executed.

In phase 1, the pressure sensor 41 detects the pressure of the hydrogen gas in the delivery line 28. A detected value of the pressure sensor 41 is stored in the storage unit 16a of the dispenser 16. When the detected value is lower than the reference pressure read by the controller 47 by a predetermined value or more, the opening adjustment of the regulating valve 43 (step ST21) is made, based on the result of comparison between the detected value of the pressure sensor 41 and a target pressure read. Immediately after the start of hydrogen gas supply, the gas pressure in the delivery line 28 can be lower than the pressure in the accumulator 12. In that case, even though the compressor 14 is driven, the hydrogen gas is discharged from the compressor 14 without being substantially compressed in the compressor 14.

In this case, when the gas pressure in the accumulator 12 is adequately higher than the gas pressure in the delivery line 28, the pressure difference can cause the hydrogen gas flow rate to increase rapidly, resulting in an excessive pressure rise rate in the gas tank 2. Therefore, in order to avoid such a situation, the opening adjustment of the regulating valve 43 is made. Specifically, the target generation unit 47a reads a detected value of the pressure sensor 41 (corresponding to the pressure in the gas tank 2) and a target pressure from the storage unit 16a of the dispenser 16. Then, the opening control unit 47c compares the detected value of the pressure sensor 41 with the target pressure, and by feedback control (PID control in this embodiment), adjusts the opening of the regulating valve 43 according to a pressure difference between the target pressure and the detected value of the pressure sensor 41. This can prevent the flow rate of the hydrogen gas introduced into the gas tank 2 from becoming excessive.

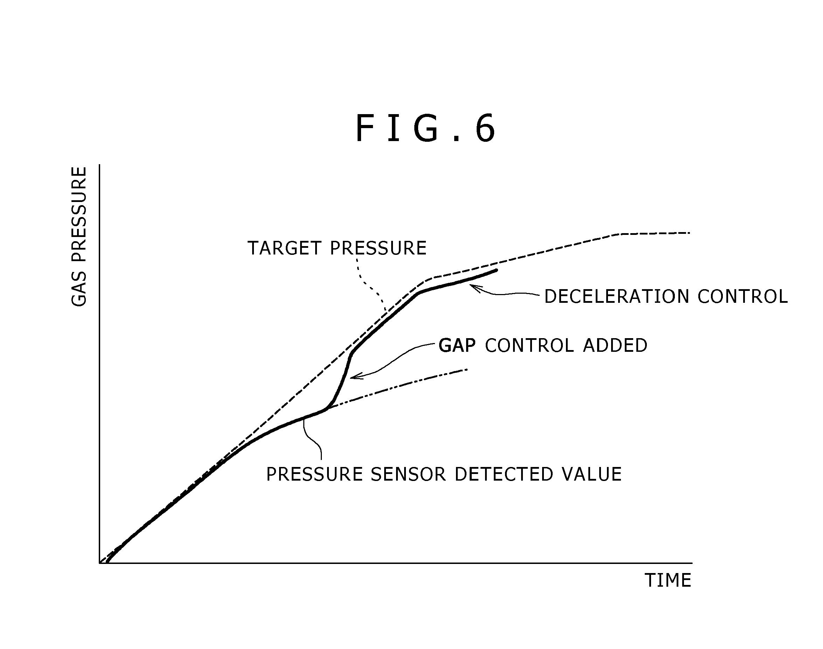

The hydrogen gas sucked from the accumulator 12 into the compressor 14 and discharged from the compressor 14 is passed through the dispenser 16, and is supplied from the nozzle portion 28a in the delivery line 28 into the gas tank 2 of the fuel cell vehicle 4. As the amount of gas in the gas tank 2 increases, the detected value of the pressure sensor 41 increases correspondingly. As shown in FIG. 6, the gas pressure in the delivery line 28 is detected by the pressure sensor 41 repeatedly at predetermined time intervals, and is compared with the target pressure read successively to perform control. The target pressure increases gradually. According to a pressure difference between the detected value of the pressure sensor 41 and the target pressure, the opening adjustment of the regulating valve 43 is made sequentially so that the detected value of the pressure sensor 41 comes close to the target pressure. At this time, the motor of the compressor 14 is maintained at the first rotational speed, and the hydrogen gas is discharged from the compressor 14 without being compressed in the compression chamber 32a of the compressor 14.

In phase 1, when the detected value of the pressure sensor 41 becomes a pressure lower than the target pressure by the predetermined value or more, the opening control unit 47c adds gap control to the PID control to increase the rate of increase of the gas flow rate. Specifically, when the pressure difference between the pressure in the gas tank 2 and the gas pressure in the accumulator 12 becomes gradually smaller, the gas flow rate can hardly increase even though the opening of the regulating valve 43 is increased by the PID control correspondingly, resulting in the detected value of the pressure sensor 41 gradually deviating from the target value. Thus, a manipulated variable by the PID control (the amount of increase in the opening of the regulating valve 43) is compensated by the gap control that changes a proportional gain. This can increase the rate of change of the manipulated variable, and facilitate the following of the target pressure by the detected value of the pressure sensor 41.

Thereafter, when the pressure difference of the detected value of the pressure sensor 41 from the reference pressure becomes a value smaller than a predetermined value (for example, 5 MPa), the operation moves to phase 2.

In phase 2, based on the target value and the detected value of the pressure sensor 41, the control for adjusting the rotational speed of the motor of the compressor 14 and the opening of the spill-back valve 45b (step ST22) is executed by the PID control. At this time, the hydrogen gas substantially compressed in the compression chamber 32a of the compressor 14 is discharged from the compressor 14, passed through the dispenser 16, and then supplied through the delivery line 28 to the gas tank 2 of the fuel cell vehicle 4. Therefore, even when the detected value of the pressure sensor 41 becomes higher than the gas pressure in the accumulator 12, the supply of hydrogen gas can be continued. When the detected value of the pressure sensor 41 is likely to exceed the target value even with the motor of the compressor 14 rotating at the first rotational speed, by adjusting the opening of the spill-back valve 45b, control for adjusting the amount of hydrogen gas supply is performed.

Then, when the detected value of the pressure sensor 41 becomes a value lower than a final target pressure by a predetermined value, the dispenser 16 (alternatively, the controller 47) outputs a deceleration command to perform deceleration control for reducing the flow rate of hydrogen gas supply (phase 3). In this deceleration control, the rate of increase of the target value is reduced, and thus the compressor 14 is driven with the rotational speed reduced. Thus, the hydrogen gas is supplied to the gas tank 2 at a reduced gas flow rate.

In phase 3, the compressor 14 is driven such that the rotational speed of the motor is kept at least at the first rotational speed, and by adjusting the opening of the spill-back valve 45b, the control for adjusting the amount of hydrogen gas supply to the gas tank 2 (step ST23) is performed.

When the target pressure reaches the final target pressure, and it is determined based on the detected value of the pressure sensor 41 that filling with the hydrogen gas has been completed, the process moves to the stop operation for executing stop control (step ST30). In the stop control, the second opening/closing valve 20 is closed, and the opening adjustment of the spill-back valve 45b is made. Specifically, while the first opening/closing valve 18 and the second opening/closing valve 20 can be closed immediately because they are opening/closing valves, the compressor 14 takes time to stop. Thus, the second opening/closing valve 20 is closed, and at the same time, power supply to the compressor 14 is stopped. With this, the rotational speed of the motor of the compressor 14 gradually decreases. At this time, it is allowed to discharge the hydrogen gas from the compressor 14 by making the opening adjustment of the opening of the spill-back valve 45b. Thereafter, the first opening/closing valve 18 is closed. In this manner, filling with the hydrogen gas is completed.

As described above, in this embodiment, when the gas pressure in the accumulator 12 is higher than the pressure on the discharge side (dispenser 16 side) of the compressor 14, the pressure difference allows the gas to be supplied from the dispenser 16 to the gas tank 2 of the fuel cell vehicle 4. At this time, when the detected value of the pressure sensor 41 is lower than the reference pressure acquired from the dispenser 16 by the predetermined value or more, gas can flow rapidly, depending on the pressure difference. Thus, the opening control unit 47c controls the opening of the regulating valve 43 to prevent the flow rate of the gas introduced into the gas tank 2 from becoming excessive. At this time, the opening control unit 47c controls the regulating valve 43 by the PID control. Therefore, the flow rate of the gas supplied to the gas tank 2 can be adjusted not to become excessive, the rate of pressure rise of the gas pressure in the gas tank 2 can be prevented from becoming excessive, and the gas flow rate can be adjusted so that the pressure of the gas delivered from the dispenser 16 follows the target pressure. Then, when the pressure difference between the gas pressure in the accumulator 12 and the gas pressure on the dispenser 16 side becomes small, the flow rate of the gas delivered from the dispenser 16 decreases correspondingly. Thus, when the gas pressure detected by the pressure sensor 41 is different from the reference pressure by a value smaller than the predetermined value, the compression control unit 47b causes the compressor 14 to compress the sucked gas. With this, even when the gas pressure on the dispenser 16 side becomes higher, gas supply to the gas tank 2 can be continued.

In this embodiment, even though the amount of gas through the regulating valve 43 is adjusted by the PID control, the pressure detected by the pressure sensor 41 can deviate from the momentarily varying target pressure. Thus, the gap control is added so as to increase the amount of flow more than the amount of gas through the regulating valve 43 controlled by the PID control. With this, when the pressure detected by the pressure sensor 41 becomes a pressure lower than the target pressure by the predetermined value or more, the gas flow rate can be increased more than ever, and the pressure detected by the pressure sensor 41 can be made to follow the target pressure.

In this embodiment, since the return line 45 returns at least a portion of the gas discharged from the compressor 14 to the suction side of the compressor 14, the flow rate of the gas delivered from the dispenser 16 can be reduced correspondingly. Thus, also when it is desired to reduce the amount of gas supply such as when it is immediately before stopping supply, the rotational speed of the compressor 14 can be maintained at a predetermined rotational speed. Consequently, it can be prevented that by driving the compressor 14 at a speed lower than or equal to the predetermined rotational speed, the operation of the compressor 14 becomes unstable. Further, the range of variation in the rotational speed of the compressor 14 can be reduced.

In this embodiment, during the stop control, the return line 45 returns the gas discharged from the compressor 14 to the suction side of the compressor 14. Thus, even when the compressor 14 takes time to stop, the first opening/closing valve 18 can be closed immediately at the completion of filling to a predetermined amount.

The present invention is not limited to the above-described embodiment, and various modifications, alterations, and the like may be made without departing from the purport thereof. For example, in the above embodiment, it is configured to be provided with the second opening/closing valve 20, which is not limiting. It may be configured to omit the second opening/closing valve 20.

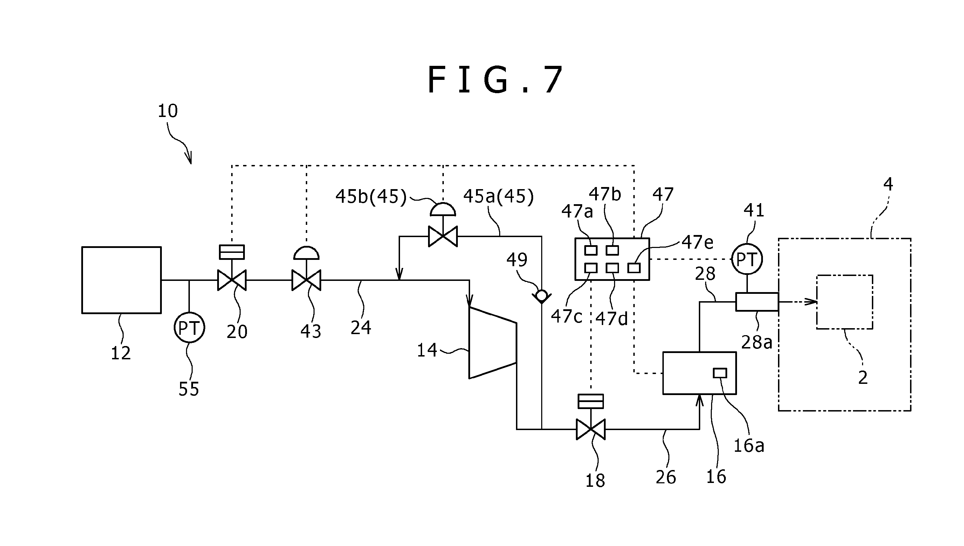

Further, as shown in FIG. 7, a suction pressure sensor 55 may be provided in the suction line 24. The suction pressure sensor 55 is disposed in a position upstream of the second opening/closing valve 20. In this case, the opening control unit 47c compares a detected value of the pressure sensor 41 with a detected value of the suction pressure sensor 55, and performs the opening control of the regulating valve 43, based on the comparison result.

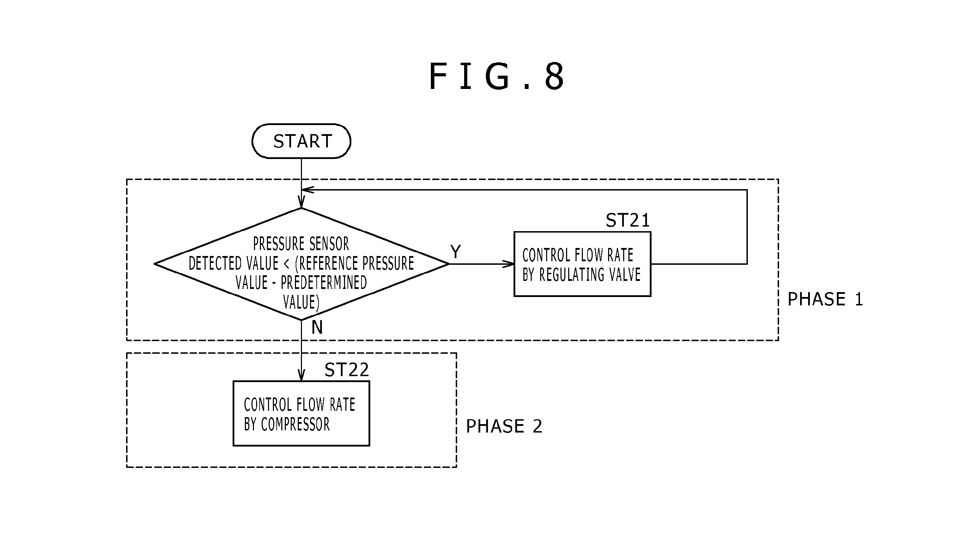

In the above embodiment, the supply operation includes phase 3 for control. Alternatively, as shown in FIG. 8, it may be configured such that a supply operation includes only phase 1 and phase 2, and phase 3 is omitted. That is, in a final stage of the supply operation, the compressor 14 is not driven with the rotational speed reduced, but control may be performed to a final pressure, remaining in the state of phase 2, making the opening adjustment of the spill-back valve 45b while performing the rotation speed control of the compressor 14, thereby leading to the stop operation shown in step ST30 in FIG. 3.

A gas filling apparatus in the present invention includes an accumulator, a compressor, a pressure sensor for detecting the pressure of gas delivered from a dispenser to be delivered to a gas tank, a regulating valve for regulating the gas flow rate, and a controller. To prevent a rapid rise in pressure of gas supplied to the gas tank, the controller includes an opening control unit for controlling the opening of the regulating valve when a detected value of the pressure sensor is lower than a pressure corresponding to the gas pressure in the accumulator by a predetermined value or more, and a compression control unit for controlling drive of the compressor so that the compressor compresses sucked gas when a pressure difference of a pressure detected by the pressure sensor from a pressure corresponding to the gas pressure in the accumulator becomes a value smaller than the predetermined value.

## Claims

1. A gas filling apparatus for supplying gas to a gas tank mounted in a tank-equipped apparatus, comprising:
an accumulator for storing gas;
a compressor for sucking the gas in the accumulator while discharging the sucked gas;
a driving machine for driving the compressor, the driving machine being adjustable in rotational speed;
a dispenser for delivering the gas discharged from the compressor to the gas tank;
a supply pressure sensor for detecting the pressure of the gas delivered from the dispenser to the gas tank;
a regulating valve for regulating the flow rate of the gas sucked into the compressor; and
a controller for performing control of the amount of gas supply, the controller comprising:
an opening control unit for controlling the opening of the regulating valve when a value obtained by subtracting a gas pressure value detected by the supply pressure sensor from a gas pressure value in the accumulator or a corresponding pressure value is more than or equal to a predetermined value; and
a compression control unit for controlling drive of the compressor so that the compressor compresses the sucked gas when a value obtained by subtracting a gas pressure value detected by the supply pressure sensor from a gas pressure value in the accumulator or a corresponding pressure value becomes a value smaller than the predetermined value.

2. The gas filling apparatus according to claim 1, wherein the opening control unit controls the opening of the regulating valve by feedback control, according to a pressure difference between a gas pressure detected by the supply pressure sensor and a target pressure.

3. The gas filling apparatus according to claim 2, wherein, when a gas pressure detected by the supply pressure sensor becomes a pressure lower than the target pressure by a predetermined value or more, the opening control unit adds gap control to the feedback control to control the regulating valve.

4. The gas filling apparatus according to claim 1, wherein the compression control unit controls the rotational speed of the driving machine by feedback control, according to a pressure difference between a gas pressure detected by the supply pressure sensor and a target pressure.

5. The gas filling apparatus according to claim 1, further comprising a return line for returning at least a portion of the gas discharged from the compressor to a suction side of the compressor.

6. The gas filling apparatus according to claim 5, further comprising:
an opening/closing valve disposed on a discharge side of the compressor, wherein,
at the end of filling the gas tank, the controller performs stop control for adjusting the amount of return of the gas by the return line, and closing the opening/closing valve.

7. A gas filling method for supplying gas from an accumulator, via a compressor, and through a dispenser in a gas filling apparatus, to a gas tank mounted in a tank-equipped apparatus, the method comprising:
when a value obtained by subtracting a pressure value of the gas delivered from the dispenser from a gas pressure value in the accumulator or a corresponding pressure value is more than or equal to a predetermined value, controlling the flow rate of the gas sucked into the compressor; and
when a value obtained by subtracting a pressure value of gas delivered from the dispenser from a gas pressure value in the accumulator or a corresponding pressure value becomes a value smaller than the predetermined value, controlling drive of the compressor so that the compressor compresses the sucked gas.

8. The gas filling method according to claim 7, further comprising controlling the flow rate of the gas sucked into the compressor by feedback control, according to a pressure difference between the pressure of gas delivered from the dispenser and a target pressure.

9. The gas filling method according to claim 8, further comprising, when a gas pressure of the gas delivered from the dispenser to the gas tank becomes a pressure lower than the target pressure by a predetermined value or more, adding gap control in addition to the feedback control.

10. The gas filling method according to claim 7, further comprising controlling drive of the compressor by feedback control, according to a pressure difference between the pressure of gas delivered from the dispenser and a target pressure.

11. The gas filling method according to claim 6, further comprising, at the end of filling the gas tank, performing stop control for adjusting the amount of return of the gas discharged from the compressor to a suction side, and closing an opening/closing valve disposed on a discharge side of the compressor.
